# EUROPEAN PATENT SPECIFICATION

(11) **EP 0 860 833 B1**
(45) Date of publication and mention of the grant of the patent: **26.04.2006**
(21) Application number: 98301277.4
(22) Date of filing: 20.02.1998
(51) Int. Cl.: G11B 33/08, G11B 19/20, F16F 3/093

(54) **Frame damper**
Rahmen-Dämpfungsvorrichtung
Amortisseur de châssis

(30) Priority: 20.02.1997 JP 5109497
(43) Date of publication of application: 26.08.1998
(73) Proprietor: POLYMATECH CO., LTD., Tokyo (JP)
(72) Inventor: Itakura, Masayuki, Kita-ku, Tokyo (JP)
(74) Representative: Whalley, Kevin

(56) References cited:
- EP-A- 0 537 801
- DE-A- 3 933 251
- GB-A- 452 858
- GB-A- 1 473 314
- GB-A- 2 060 816
- GB-A- 2 080 922
- GB-A- 2 302 579
- US-A- 2 520 757
- US-A- 4 369 950
- US-A- 4 687 173

## Description

The present invention relates to a frame damper for reducing vibration of devices employing optical disk media such as acoustic equipment, video equipment, information equipment and various kinds of precision equipment, especially CDs, CD-ROM optical disks, magneto-optical disks, DVDs, DVD-ROMs etc., by means of vibration control or vibration isolation by using an elastic body.

In conventional dampers supporting the mechanical chassis of optical disk equipment or the like, there are a suitably used a damper 11 or a damper 21 as shown in Fig.2 or Fig.3 of the accompanying drawings, which are composed of one kind of an elastic body. An installing structure as shown in Fig.4 is generally known, which is constructed so as to embed a damper 11 or 21 into a mechanical chassis 12 and to fix it to the mechanical chassis with a fixing pin 16 at the trunk portion of the damper. As a result, this requires a complex assembly process and the operation thereof is not efficient.

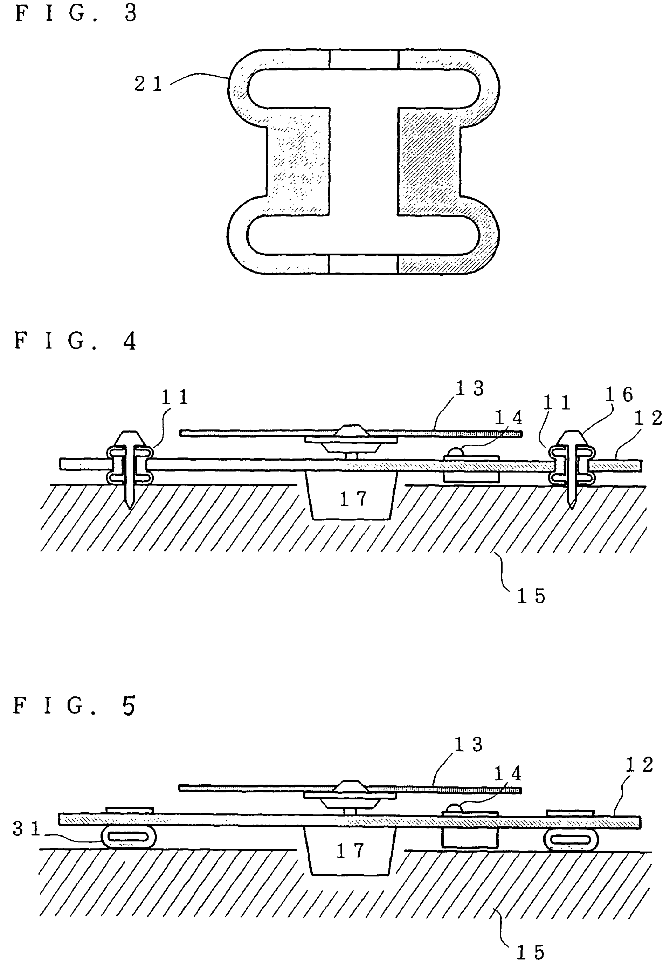

Also, as shown in Fig.5, there is known another type of installing structure available, which is used to fix a mechanical chassis 12 on a damper 31 and employs no pin for fixing it. In this type, since spring constant in the direction parallel with a disk surface is low, there is a drawback that the mechanical chassis 12 itself having an optical pick-up 14 and a rotation portion 17 greatly fluctuates in the case of an optical disk device rotating at high double-speed.

The same reference numerals are used in Figs. 4 and 5 to designate like parts. Reference numeral 13 denotes a disc, and reference numeral 15 denotes a body frame.

Attention is also drawn to the disclosures of GB-2302579A, which discloses the features of the preamble of claim 1.

The present invention relates to a frame damper for supporting a mechanical chassis which has a rotating portion of a media disk of a device for storing data into or reading data from disk information media by a non-contact device and an optical transmitter or an optical receiver, wherein vibration is reduced by a composition of at least two kinds of elastic bodies wherein a body frame is made of a resin-like elastic body and an installing portion of the mechanical chassis to the body frame is made of a rubber-like elastic body. The non-contact device may be suitably an optical disk, a magneto-optical disk, or the like.

More particularly, the invention provides a frame damper for a rotating disk device according to claim 1.

The present invention retains the conventional installing structure of a mechanical chassis, but utilizes as an installing portion of a mechanical chassis a rubber-like elastic body (hereinafter referred to as a low elastic body), and furthermore utilizes as a body frame a resin-like elastic body (hereinafter referred to as a high elastic body), thereby controlling and isolating even vibration caused by high double-speed rotation of a disk, by means of the body frame composed of two kinds of elastic bodies as described above.

Further, by integral-molding both the low elastic body of the installing portion of the mechanical chassis and the high elastic body of the body frame, it is not necessary to follow an assembly process using a fixing pin and working efficiency is thereby improved. The invention will be further described, by way of example only, with reference to the accompanying drawings, in which:

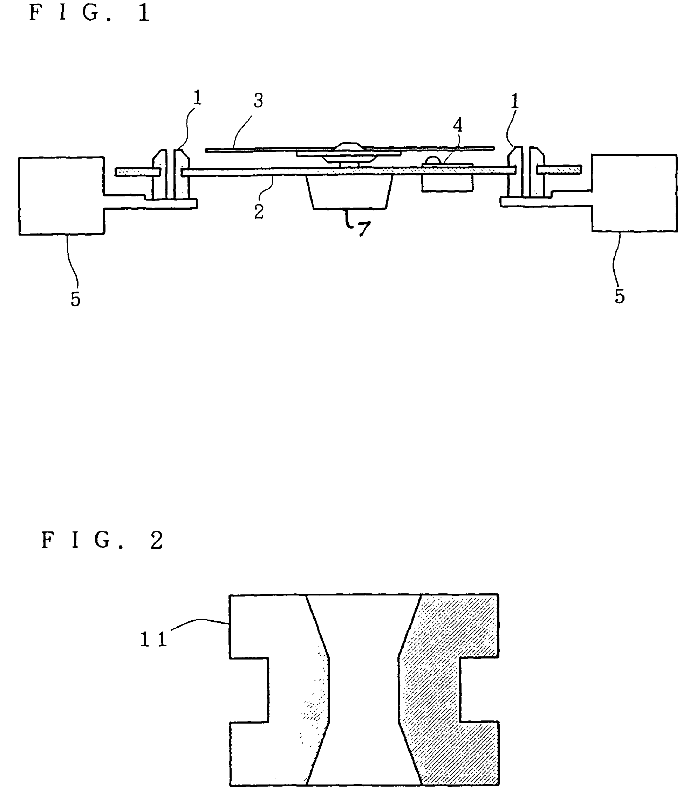

Fig. 1 is a longitudinal sectional view of a frame damper according to the present invention;
Fig.2 is a longitudinal sectional view of a conventional push-up type damper;
Fig.3 is a longitudinal sectional view of a conventional push-up type damper having a hollow-curved supporting portion in the direction vertical to the conventional disk surface;
Fig. 4 is a longitudinal sectional view of a conventional mechanical chassis supported by a damper; and
Fig.5 is a longitudinal sectional view of an installing type damper without using a conventional fixing pin.

For the above described reasons, the present invention employs a high elastic body with E value more than 1.176 × 10⁹ N/m² (1.2 × 10⁴ kg/cm²) as the high elastic body to be used for a body frame which supports a mechanical chassis of optical disk equipment or the like, while the invention also employs an elastic body with a dynamic elastic modulus (hereinafter referred to as E value) less than 9.8 × 10⁸ N/m² (1.0 x 10⁴kg/cm²) which aims at vibration damping and with rubber hardness JIS-A Class less than 70 as a low elastic body to be used for an installing portion of the mechanical chassis. By integral-molding both the low and high elastic bodies, a frame damper is formed. Further, it is more effective and desirable for damping vibration of a device to employ materials of high internal damping characteristics where the high elastic body has loss factor of tan δ more than 0.01 and the low elastic body has loss factor of tan δ more than 0.3. As an elastic body for forming a frame damper, thermoplastic material or thermosetting material may be used, while the frame damper may be manufactured by well known processes, such as processes of bonding the low elastic body and the high elastic body together after molding them respectively by a metal mold or of molding either the low elastic body or the high elastic body by a metal mold first and then inserting it into the metal mold of the other remaining elastic body and/or of combined-molding by injection molding.

As materials of the low elastic body, elastomers having E value less than 9.8×10⁸N/m²(1.0 x 10⁴kg/cm²) such as styrene series thermoplastic elastic, olefinic series thermoplastic elastomer, polyester series thermoplastic elastomer, urethane series thermoplastic elastomer, or the like can be used.

As materials of the high elastic body, thermosetting resin such as said thermoplastic elastomer or polyethylene (PE), polypropylene (PP), polyvinyl chloride (PVC), polystyrene (PS), acrylonitrile-styrene acrylate resin (ASA), acrylonitrile-butadiene-styrene resin (ABS), polyamide (PA), polyacetal (POM), polycarbonate (PC), polyethylene terephthalate (PET), polybutylene terephthalate (PBT), polyphenylene oxide (PPO), polyphenylene sulfide (PPS), thermoplastic resin or phenol resin such as polyurethane (PUR), epoxy resin (EP), silicon resin (SI), polyurethane (PUR), epoxy resin (EP), silicon resin (SI), polyurethane (PUR), melamine resin (MF), polyester resin (UP), and so on can be used.

By the frame damper according to the present invention, vibration isolation effect in the direction vertical to the disk surface can be identical with the vibration isolation effect of the conventional damper, and vibration in the direction parallel to the disk surface can be suppressed. Because the low elastic body reduces the natural frequency of the damper, the effect can be attained by utilizing a rubber-like elastic body having an E value less than 9.8×10⁶N/m² (1.0 x 10⁴kg/cm²).

Also, by utilizing a high elastic body having tan δ more than 0.01, self-generating vibration can be reduced even inside the high elastic body and the effect of vibration control can be further increased.

Furthermore, by reducing the rubber hardness of the low elastic body, it becomes possible to easily reduce its spring constant and to enhance the vibration isolation characteristics in the direction vertical to the disk surface without lowering the vibration control characteristics in the direction parallel to the disk surface.

By employing thermoplastic materials of the low elastic body and the high elastic body, the damper according to the present invention can be formed by insert molding with an ordinary injection molding machine, or by two-colour molding by using a plurality of dies. The number of manufacturing steps can be reduced as a result of automation and labour-saving. When the mechanical chassis and the body frame are assembled, the working process time can be reduced to about one-tenth (from 60 seconds to 6 seconds) and the assembly work can be conducted effectively.

Next, the present invention will be described in detail with reference to the embodiment as shown in Fig. 1.

A low elastic body 1 of an installing portion of a mechanical chassis 2 to a body frame 5 is formed to a hollow cylindrical shape from a styrene group thermoplastic elastomer having JIS-A Hs = 40, E = 4.9 × 10⁶ N/m² (50kg/cm²), tan δ = 0.35 in advance. Then, a high elastic body of the body frame 5 which is made of PPE, E=1.96×10⁹ N/m² (2.0 x 10⁴kg/cm²), but with three different kinds of tan δ=0.005, tan δ = 0.01 and tan δ = 0.05 is integral-molded by a metal mold wherein the low elastic body formed in advance is inserted, thereby making a frame damper.

In Fig. 1, reference numeral 3 denotes a disk, reference numeral 4 denotes an optical pick-up, and reference numeral 7 denotes a rotation portion.

A test for vibration transmissibility in the direction vertical to the disk 3 and an examination of mechanical run-out characteristics by measuring the acceleration (G value) in the direction parallel to the disk 3 were conducted.

As a comparative example, the same test was conducted by using a similar shape as shown in Fig. 3. As a material, butyl rubber was used.

As a condition for the vibration test, a mechanical chassis of 120g was supported by frame dampers at four points and was excited at a frequency of 100Hz at which the disk is resonated. Acceleration on the mechanical chassis to the excitation acceleration of the vibration was measured and the acceleration on the mechanical chassis to the excitation acceleration of the vibration was obtained as a ratio (%). The result is shown in Table 1.

In vibration transmissibility in the direction vertical to the disk, that of the comparative example is identical with that of embodiments 1,2 and 3. In the embodiment 4, as the hardness of the low elastic body is reduced to 30°, the natural frequency is reduced and, as a result, the vibration transmissibility is also reduced and the vibration isolation effect is improved.

As for measurement of a mechanical run-out by G value in the direction parallel to the disk, since a spring constant in the direction parallel to the disk is not enough in the case of the conventional shape of the comparative example, the G value becomes large, thereby causing mechanical run-out. In the embodiment 1, since a spring constant in the direction parallel to the disk is obtained, the G value can be reduced to one third of the conventional damper shape. In the embodiments 2, 3 and 4, since materials of high loss factor are employed and for the high elastic body, it becomes possible to reduce the G value further.

Although various embodiments of the present invention have been described above in detail, the frame damper of the present invention can take various shapes according to installing methods or shapes required according to circumstances.

**Table 1**

| | Comparative Ex. | Embodiment 1 | Embodiment 2 | Embodiment 3 | Embodiment 4 |
|---|---|---|---|---|---|
| Hardness of a low elastic body | 4 0 | 4 0 | 4 0 | 4 0 | 3 0 |
| High elstic body tan δ | -- | 0.005 | 0.01 | 0.05 | 0.05 |
| Vibration transmissibility (%) | 10 | 1 0 | 1 0 | 1 0 | 5 |
| G value in the parallel direction with a disk | 2 | 0.7 | 0.5 | 0.4 | 0.4 |

## Claims

1. A frame damper for a rotating disk device, the frame damper comprising:
a body frame (5); and
an installing portion (1) connected to said body frame (5);
said rotating disk device further comprising:
a mechanical chassis (2) connected to said installing portion (1);
a rotating portion (7) connected to said mechanical chassis (2); and
a disk (3) connected to said rotating portion (7) and being rotatable by said rotating portion, said disk (3) being an optical disk or a magneto-optical disk;
wherein said frame damper supports said mechanical chassis (2) connected with said rotating portion (7) and said disk (3) for media of a device for storing data into or reading data from a disk information medium by a non-contact device and an optical transmitter or an optical receiver; **characterised in that**
said body frame (5) is a high elastic body, said installing portion (1) is a low elastic body, and a composition of the high elastic body and the low elastic body reduce vibration of the disk (3);
said body frame is made of a resin-like elastic body, said body frame having a dynamic elastic modulus greater than 1.17 6 x 10⁹ N/m² (1.2 × 10⁴ kg/cm²); and
said installing portion is made of a rubber-like elastic body, said installing portion having a dynamic elastic modulus less than 9.8 x 10⁸ N/m² (1.0 x 10⁴kg/cm²).

2. A frame damper as claimed in claim 1, **characterized in that** said installing portion (1) is formed of thermoplastic material, and said body frame (5) is formed of thermosetting or thermoplastic material.

3. A frame damper as claimed in claim 1 or 2, **characterized in that** a non-contact device (4) reading information from said disk (3) is connected to said chassis (2).

4. A frame damper as claimed in claim 1, **characterized in that**
said installing portion (1) is formed of thermoplastic material;
said body frame (5) is formed of thermosetting or thermoplastic material;
a non-contact device (4) reading information from said disk (3) is connected to said chassis (2); and
said disk (3) is an optical disk or a magneto-optical disk.

## Revendications

1. Moyen d'amortisseur pour un dispositif à disque rotatif, le moyen d'amortisseur comprenant :
un bâti de corps (5) ; et
une partie d'installation (1) raccordée audit bâti de corps (5) ;
ledit dispositif à disque rotatif comprenant en outre :
un châssis mécanique (2) raccordée à ladite partie d'installation (1) ;
une partie rotative (7) raccordée audit châssis mécanique (2) ; et
un disque (3) raccordé à ladite partie rotative (7) et pouvant être tourné par ladite partie rotative, ledit disque (3) étant un disque optique ou un disque magnéto-optique ;
ledit moyen d'amortisseur supportant ledit châssis métallique (2) raccordé à ladite partie rotative (7) et ledit disque (3) servant de support d'un dispositif pour enregistrer des données dans un support d'information du disque ou pour lire des données à partir de celui-ci, par l'intermédiaire d'un dispositif sans contact et d'un émetteur optique ou d'un récepteur optique ;
**caractérisé en ce que**
ledit bâti de corps (5) est un corps hautement élastique, ladite partie d'installation (1) étant un corps à faible élasticité et une composition du corps hautement élastique et du corps à faible élasticité réduisant les vibrations du disque (3) ;
ledit bâti de corps étant composé d'un corps élastique de type résine, ledit bâti de corps ayant un module d'élasticité dynamique supérieure à 1,176 x 10⁹ N/m² (1,2 x 10⁴ kg/cm²) ; et
ladite partie d'installation étant composée d'un corps élastique de type caoutchouc, ladite partie d'installation ayant un module d'élasticité dynamique inférieur à 9,8 x 10⁸ N/m² (1,0 x 10⁴ kg/cm²).

2. Moyen d'amortisseur selon la revendication 1, **caractérisé en ce que** ladite partie d'installation (1) est composée d'un matériau thermoplastique, ledit bâti de corps (5) étant composé d'un matériau thermodurcissable ou d'un matériau thermoplastique.

3. Moyen d'amortisseur selon les revendications 1 ou 2, **caractérisé en ce qu'**un dispositif sans contact (4) lisant les informations à partir dudit disque (3) est raccordé audit châssis (2).

4. Moyen d'amortisseur selon la revendication 1, **caractérisé en ce que**
ladite partie d'installation (1) est composée d'un matériau thermoplastique ;
ledit bâti de corps (5) est composé d'un matériau thermodurcissable ou thermoplastique ;
un dispositif sans contact (4), lisant les informations à partir dudit disque (3) est raccordé audit châssis (2) ; et
ledit disque (3) est un disque optique ou un disque magnéto-optique.

## Patentansprüche

1. Dämpfungsvorrichtung für eine rotierende Scheibenvorrichtung, die folgendes aufweist:
einen Gehäuserahmen (5); und
einen mit dem Gehäuserahmen (5) verbundenen Installationsabschnitt (1);
wobei die rotierende Scheibenvorrichtung ferner aufweist:
ein mechanisches Chassis (2), das mit dem Installationsabschnitt (1) verbunden ist;
einen rotierenden Abschnitt (7),der mit dem mechanischen Chassis (2) verbunden ist; und
eine Scheibe (3), die mit dem rotierenden Abschnitt (7) verbunden und durch den rotierenden Abschnitt drehbar ist, wobei die Scheibe (3) eine optische Speicherplatte oder eine magnetooptische Speicherplatte ist;
wobei die Dämpfungsvorrichtung das mit dem rotierenden Abschnitt (7) verbundene mechanische Chassis (2) und die Scheibe (3) unterstützt, um durch eine kontaktfreie Vorrichtung und einen optischen Sender oder optischen Empfänger Daten auf bzw. von einem scheibenförmigen Informationsmedium zu speichern bzw. zu lesen;
**dadurch gekennzeichnet, daß**
der Gehäuserahmen (5) ein hochelastischer Körper ist, der Installationsabschnitt (1) ein niedrigelastischer Körper ist, und die Zusammensetzung aus dem hochelastischen Körper und dem niedrigelastischen Körper, die Vibration der Scheibe (3) dämpft;
der Gehäuserahmen aus einem harzartigen elastischen Körper besteht, wobei der Gehäuserahmen ein dynamisches Elastizitätsmodul von mehr als 1,176 x 10⁹ N/m² (1,2 x 10⁴ kg/cm²) besitzt; und
der Installationsabschnitt aus einem gummiartigen elastischen Körper besteht, wobei der Installationsabschnitt ein dynamisches Elastizitätsmodul von weniger als 9,8 x 10⁸ N/m² (1,0 x 10⁴ kg/cm²) besitzt.

2. Dämpfungsvorrichtung nach Anspruch 1, **dadurch gekennzeichnet, daß** der Installationsabschnitt (1) aus thermoplastischem Material besteht und der Gehäuserahmen (5) aus hitzehärtbarem oder thermoplastischem Material besteht.

3. Dämpfungsvorrichtung nach Anspruch 1 oder 2, **dadurch gekennzeichnet, daß** eine kontaktfreie Vorrichtung (4) mit dem Chassis (2) verbunden ist, die Informationen von der Scheibe (3) liest.

4. Dämpfungsvorrichtung nach Anspruch 1, **dadurch gekennzeichnet, daß**
der Installationsabschnitt (1) aus thermoplastischem Material besteht;
der Gehäuserahmen (5) aus hitzehärtbarem oder thermoplastischem Material besteht;
eine kontaktfreie Vorrichtung (4) mit dem Chassis (2) verbunden ist, die Informationen von der Scheibe (3) liest; und
die Scheibe (3) eine optische Speicherplatte oder eine magnetooptische Speicherplatte ist.
